# EUROPÄISCHE PATENTSCHRIFT

(11) **EP 1 452 761 B1**
(45) Veröffentlichungstag und Bekanntmachung des Hinweises auf die Patenterteilung: **09.08.2006**
(21) Anmeldenummer: 03029501.8
(22) Anmeldetag: 20.12.2003
(51) Int. Cl.: F16D 25/08, B60K 17/02

(54) **Reibungskupplung für ein Antriebsaggregat eines Kraftfahrzeugs**
Friction clutch for a drive unit of a motor vehicle
Embrayage à friction pour unité d'entraînement d'un véhicule

(30) Priorität: 28.02.2003 DE 10308771
(43) Veröffentlichungstag der Anmeldung: 01.09.2004
(73) Patentinhaber: Dr.Ing. h.c.F. Porsche Aktiengesellschaft, 70435 Stuttgart (DE)
(72) Erfinder: Hülsemann, Ulrich, 75242 Neuhausen (DE)

(56) Entgegenhaltungen:
- EP-A- 0 383 576
- FR-A- 2 735 726
- US-A- 5 183 141

## Beschreibung

Die Erfindung bezieht sich auf eine Reibungskupplung für ein Antriebsaggregat eines Kraftfahrzeugs, die zwischen einer Brennkraftmaschine und einem Getriebe wirksam ist.

Eine bekannte Reibungskupplung der eingangs genannten Bauart, US 5,183,141, ist mit einer Ausrückvorrichtung versehen, die innerhalb eines die Reibungskupplung umgebenden Gehäuses angeordnet ist. Die Ausrückvorrichtung weist ein Ausrücklager und eine hydraulische Betätigungseinrichtung auf, die ein äußeres am Gehäuse befestigtes Zylindergehäuse und einen inneren Betätigungskolben umfasst, wobei der Betätigungskolben axialbeweglich im Zylindergehäuse angeordnet ist und mit einem Ausrücklager bzw. einer Tellerfeder der Kupplung zusammenarbeitet. Eine vergleichbare Ausführung geht aus der DE 694 22 276 T2 hervor. Allerdings ist hierbei eine inneres Zylindergehäuse der hydraulischen Betätigungseinrichtung mit einer Wand des Gehäuses fest verbunden und eine verschiebbarer Betätigungskolben umgibt diese Zylindergehäuse.

Aufgabe der Erfindung ist es, eine zwischen einer Brennkraftmaschine und einem Getriebe vorgesehene Reibungskupplung mit einer Ausrückvorrichtung auszustatten, die eine hydraulische Betätigungsvorrichtung funktionsgerecht aufnimmt und sich auf einfache Weise in den Bereich zwischen Brennkraftmaschine und Getriebe einbauen lässt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen dass, das Traggestell steif ausgeführt ist und das Ausrücklager sowie das Zylindergehäuse sicher aufnimmt. Dabei trägt das Traggestell, weil unabhängig vom Getriebegehäuse ausgebildet, zur weitgehend freien Gestaltung der Reibungskupplung bei. Eine funktionsgerechte Halterung des Traggestells wird erreicht, wenn es an der Stirnseite der Brennkraftmaschine befestigt ist. Durch die Lagerplatte und die Befestigungsstreben ist das Traggestell bezüglich Gewicht, Festigkeit und Raumanspruch auf einfache Weise optimierbar. Dies wird auch noch dadurch unterstützt, dass die Lagerplatte etwa die Form eines gleichseitigen Dreiecks besitzt, an dessen Spitzen die Befestigungsstreben angebracht sind. Schließlich trägt zur baulichen Vereinfachung bei, dass die Befestigungsstreben und das Zylindergehäuse aus einem Stück mit der Lagerplatte hergestellt sind.

In der Zeichnung wird ein Ausführungsbeispiel der Erfindung gezeigt, das nachstehend näher beschrieben ist.

Es zeigen
- Fig. 1: einen Längsschnitt durch eine Reibungskupplung nach der Erfindung,
- Fig. 2: einen Schnitt nach der Linie II-II der Fig. 1 in größerem Maßstab,

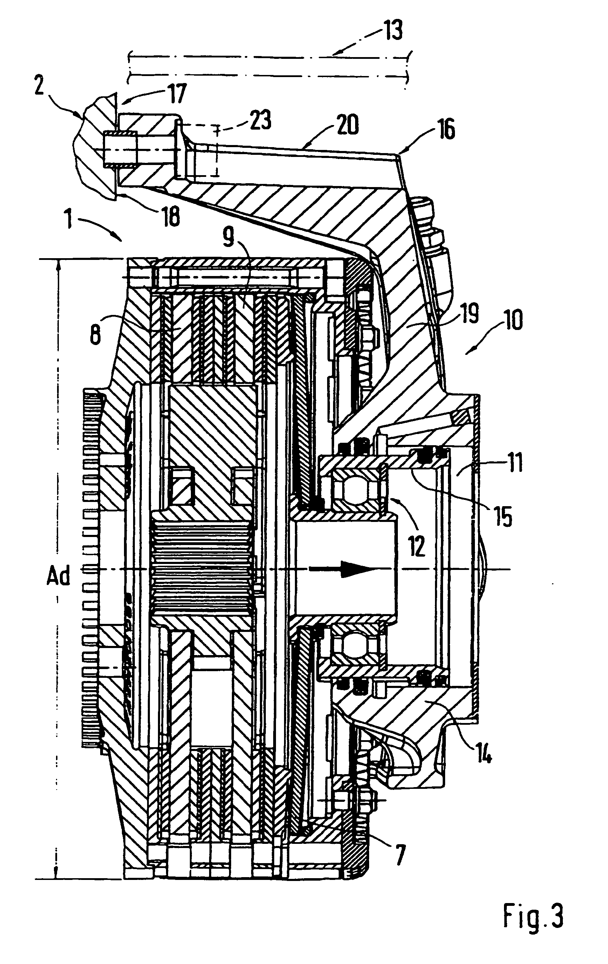

- Fig. 3: einen Schnitt nach der Linie III-III der Fig. 2,
- Fig. 4: eine Einzelheit X der Fig. 1 in Schrägansicht.

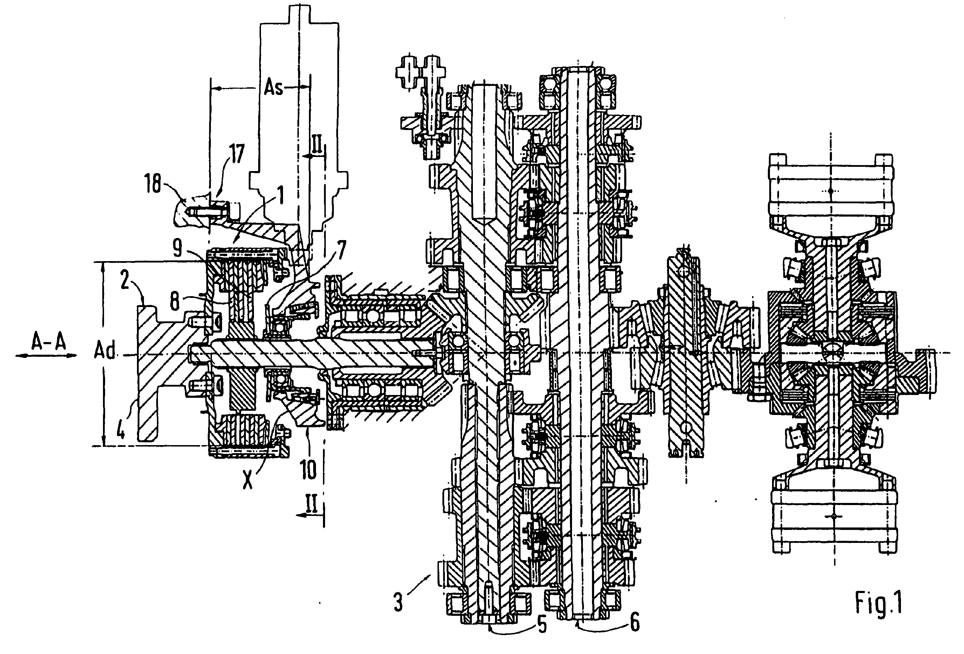

Eine Reibungskupplung 1 ist Bestandteil eines in ein Kraftfahrzeug einbaubaren Antriebsaggregats und zwischen einer Brennkraftmaschine 2 und einem Getriebe 3 wirksam. Von der Brennkraftmaschine 2 ist eine Kurbelwelle 4 dargestellt; von dem Getriebe 3 zwei Zahnräder tragende Wellen 5 und 6, die quer zu einer Fahrzeuglängsrichtung A-A verlaufen - Fig. 1 -. Mit einer Tellerfeder 7 der mehrere Kupplungsscheiben 8 und 9 aufweisenden Reibungskupplung 1 arbeitet eine Ausrückvorrichtung 10, die eine hydraulische Betätigungsvorrichtung 11 besitzt, zusammen. Die ein Ausrücklager 12 umfassende Ausrückvorrichtung 10 ist mit Betätigungsvorrichtung 11 innerhalb eines Gehäuses 13 angeordnet, wobei die Betätigungsvorrichtung 11 mit einem Zylindergehäuse 14 versehen ist, in dem ein axialbeweglicher Betätigungskolben 15 arbeitet.

Das Zylindergehäuse 14 der hydraulischen Betätigungsvorrichtung 11 ist mit einem Traggestell 16 verbunden, das an einem benachbart der Brennkraftmaschine 2 bzw. der Reibungskupplung 1 angeordnet ist, und zwar unabhängig von dem letztere umgebenden Gehäuse 13. Das Traggestell 16 ist an einer Stirnseite 17 bzw. an einer Wand 18 der Brennkraftmaschine 2 befestigt, und es weist eine mit Abstand As zur Stirnseite 17 bzw. Wand 18 und Reibungskupplung 1 angeordnete Lagerplatte 19 auf. Mit der Lagerplatte 19 verbunden sind das Zylindergehäuse 14 und Befestigungsstreben 20,21 und 22, welche etwa rechtwinkelig von der Lagerplatte 19 weggeführte Befestigungsstreben 20,21 und 22 einen Außendurchmesser Ad der Reibungskupplung 1 umgreifen, sich an der Wand 18 abstützen und unter Vermittlung von Schrauben 23 an der Wand 18 der Brennkraftmaschine 2 in Lage gehalten sind.

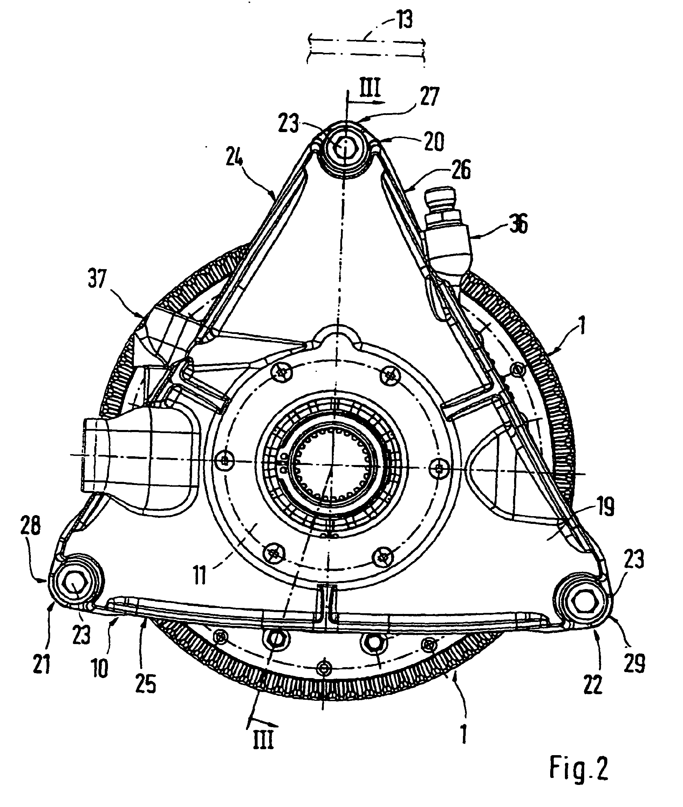

Nach Fig. 2 weist die Lagerplatte 19 etwa die Form eines gleichseitigen Dreiecks mit Seiten 24,25 und 26 auf, an dessen Spitzen 27,28 und 29 die Befestigungsstreben 20, 21 und 22 angebracht sind. Dabei sind die die Reibungskupplung 1 umgebenden Befestigungsstreben 20, 21 und 22 aus einem Stück mit der Lagerplatte 19 hergestellt, sinngemäß gilt dies auch für das Zylindergehäuse 14. Die derart gestaltete Lagerplatte 19 ist als Gussteil ausgebildet, wobei es leichtmetallischer oder eisenmetallischer Gattung sein kann.

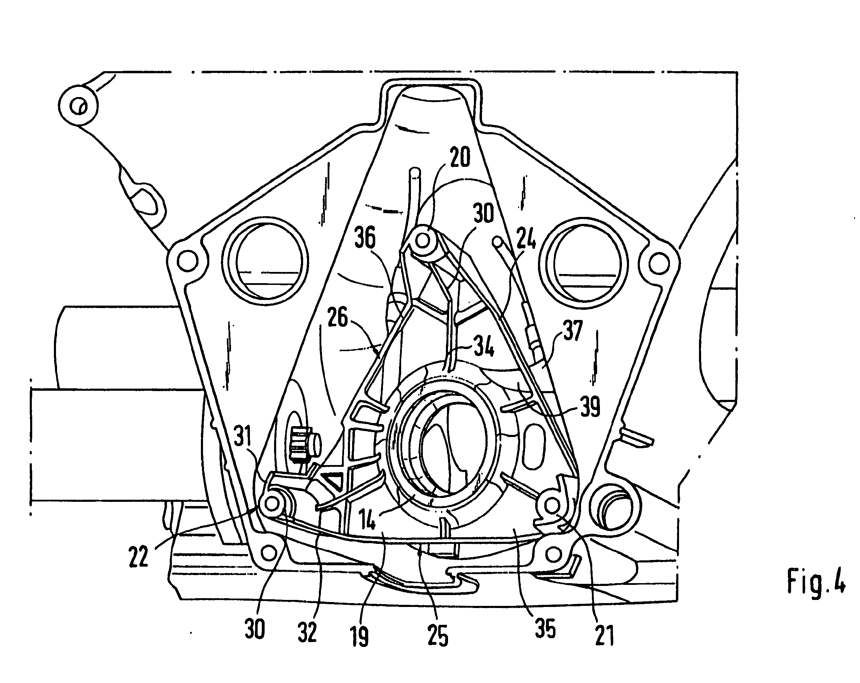

Gemäß Fig. 4 weist jede Befestigungsstrebe z.B. 21 ein Strebenauge 30 mit kreiszylindrischem Querschnitt auf, von dem tangential relativ kurze Versteifungsflansche 31 und 32 weggeführt sind die in Richtung der Seiten 21 und 22 verlaufen. Zusätzlich können die Befestigungsstreben 20,21 und 22 bzw. die Strebenaugen 30 mit stegartige Knotenstreben 33 abgestützt werden, die in Verstärkungsrippen 34 übergehen. Insgesamt ist eine Innenseite 35 der Lagerplatte 19 mit einer Vielzahl von unterschiedlichen Rippen versehen, die der Lagerplatte 19 eine definierte Festigkeit verleihen und das Zylindergehäuse 14 funktionsgerecht an letzterer hält. Schließlich sind in die Lagerplatte 19 Anschlüsse 36 und 37 und Leitungen 38 und 39 für die hydraulische Betätigungsvorrichtung 11 integriert.

## Patentansprüche

1. Reibungskupplung für ein Antriebsaggregat eines Kraftfahrzeugs, die im Betrieb zwischen einer Brennkraftmaschine (2) und einem Getriebe (3) wirksam ist und eine Ausrückvorrichtung (10) umfasst, wobei die innerhalb eines Gehäuses (13) angeordnete Ausrückvorrichtung (10) ein Ausrücklager (12) und eine hydraulische Betätigungseinrichtung (11) mit einem Zylindergehäuse (14) und einem in letzterem arbeitenden Betäfigungskolben (15) aufweist, **dadurch gekennzeichnet, dass** das Zylindergehäuse (14) der hydraulischen Betätigungseinrichtung (11) an einem Traggestell (16) angebracht ist, das unabhängig vom Gehäuse (13) ausgebildet ist und benachbart der Brennkraftmaschine (2) und der Reibungskupplung (1) anbringbar ist.

2. Reibungskupplung nach Anspruch 1, **dadurch gekennzeichnet, dass** das Traggestell (16) an einer eine Stirnseite (17) bildenden Wand (18) der Brennkraftmaschine (2) befestigbar ist.

3. Reibungskupplung nach den Ansprüchen 1 und 2, **dadurch gekennzeichnet, dass** das Traggestell (16) mit einer zur Wand (18) der Brennkraftmaschine und zur Reibungskupplung mit Abstand (As) angeordneten Lagerplatte (19) versehen ist, an der das Zylindergehäuse (14) der Betätigungseinrichtung (11) angebracht ist.

4. Reibungskupplung nach Anspruch 3, **dadurch gekennzeichnet, dass** die Lagerplatte (19) mit zur Wand (18) hin ausgerichteten einen Außendurchmesser (Ad) der Reibungskupplung (1) umgreifende Befestigungsstreben (20,21,22) versehen ist, die sich an der Wand (18) abstützen und unter Vermittlung von Schrauben (23) an besagter Wand (18) befestigt sind.

5. Reibungskupplung nach Anspruch 4, **dadurch gekennzeichnet, dass** jede Befestigungsstrebe (20,21,22) ein Strebenauge (30) mit kreiszylinderischem Querschnitt aufweist, von dem relativ kurze Versteifungsflansche (31,32) tangential weggeführt sind.

6. Reibungskupplung nach den Ansprüchen 3 und 4, **dadurch gekennzeichnet, dass** die Lagerplatte (19) etwa die Form eines gleichseitigen Dreiecks mit Seiten (24,25,26) besitzt, an dessen Spitzen (27,28,29) die Befestigungsstreben (20,21,22) angebracht sind.

7. Reibungskupplung nach einem der Ansprüche 4-6, **dadurch gekennzeichnet, dass** die Befestigungsstreben (20,21,22) aus einem Stück mit der Lagerplatte (19) hergestellt sind.

8. Reibungskupplung nach einem der Ansprüche 3-7, **dadurch gekennzeichnet, dass** das Zylindergehäuse (14) aus einem Stück mit der Lagerplatte (19) hergestellt ist.

9. Reibungskupplung nach den Ansprüchen 7 und 8, **dadurch gekennzeichnet, dass** die Lagerplatte (19) als Gussteil leichtmetallischer oder eisenmetallischer Gattung ausgebildet ist.

10. Reibungskupplung nach einem der Ansprüche 3-9, **dadurch gekennzeichnet, dass** in die Lagerplatte (19) Anschlüsse (36,37) und Leitungen (38,39) für die hydraulische Betätigungseinrichtung (11) integriert sind.

## Claims

1. A friction clutch for a drive assembly of a motor vehicle, which friction clutch acts, during operation, between an internal-combustion engine (2) and a transmission (3) and comprises a clutch-release device (10), wherein the clutch-release device (10), which is arranged inside a housing (13), has a clutch-release bearing (12) and a hydraulic actuating means (11) with a cylinder casing (14) and an actuating piston (15) working in the latter, **characterised in that** the cylinder casing (14) of the hydraulic actuating means (11) is mounted on a supporting frame (16) which is formed independently of the housing (13) and is mountable adjacent to the internal-combustion engine (2) and the friction clutch (1).

2. A friction clutch according to claim 1, **characterised in that** the supporting frame (16) is fixable to a wall (18) of the internal-combustion engine (2), the wall (18) forming a face (17).

3. A friction clutch according to claims 1 and 2, **characterised in that** the supporting frame (16) is provided with a bearing plate (19) which is arranged with spacing (As) from the wall (18) of the internal-combustion engine and from the friction clutch and on which the cylinder casing (14) of the actuating means (11) is mounted.

4. A friction clutch according to claim 3, **characterised in that** the bearing plate (19) is provided with fastening struts (20, 21, 22) which extend towards the wall (18) and enclose an outer diameter (Ad) of the friction clutch (1) and which are supported on the wall (18) and fastened to said wall (18) by means of screws (23).

5. A friction clutch according to claim 4, **characterised in that** each fastening strut (20, 21, 22) has a strut eye (30) with a circular cylindrical cross-section, from which relatively short stiffening flanges (31, 32) extend tangentially.

6. A friction clutch according to claims 3 and 4, **characterised in that** the bearing plate (19) has the approximate shape of an equilateral triangle with sides (24, 25, 26), at the points (27, 28, 29) of which the fastening struts (20, 21, 22) are mounted.

7. A friction clutch according to any one of claims 4 to 6, **characterised in that** the fastening struts (20, 21, 22) are manufactured in one piece with the bearing plate (19).

8. A friction clutch according to any one of claims 3 to 7, **characterised in that** the cylinder casing (14) is manufactured in one piece with the bearing plate (19).

9. A friction clutch according to claims 7 and 8, **characterised in that** the bearing plate (19) is formed as a light-metal or ferrous-metal casting.

10. A friction clutch according to any one of claims 3 to 9, **characterised in that** connections (36, 37) and lines (38, 39) for the hydraulic actuating means (11) are integrated into the bearing plate (19).

## Revendications

1. Embrayage à friction pour le groupe moteur d'un véhicule automobile, qui pendant le fonctionnement opère entre un moteur à combustion interne (2) et une transmission (3), et comprend un dispositif de débrayage (10), le dispositif de débrayage (10) disposé à l'intérieur d'un carter (13) comportant une butée de débrayage (12) et un dispositif d'actionnement hydraulique (11) avec un boîtier de cylindre (14) et un piston d'actionnement (15) fonctionnant dans ce dernier, **caractérisé en ce que** le boîtier de cylindre (14) du dispositif d'actionnement hydraulique (11) est placé sur une structure portante (16), qui est réalisée indépendamment du carter (13), et peut être placé au voisinage du moteur à combustion interne (2) et de l'embrayage à friction (1).

2. Embrayage à friction selon la revendication 1, **caractérisé en ce que** la structure portante (16) est fixée sur une paroi (18), formant une face frontale (17), du moteur (2).

3. Embrayage à friction selon les revendications 1 et 2, **caractérisé en ce que** la structure portante (16) est pourvue d'une plaque d'appui (19) disposée à distance As de la paroi (18) du moteur et de l'embrayage à friction, plaque sur laquelle est placé le boîtier de cylindre (14) du dispositif d'actionnement (11).

4. Embrayage à friction selon la revendication 3, **caractérisé en ce que** la plaque d'appui (19) est pourvue d'entretoises de fixation (20, 21, 22) orientées vers la paroi (18) et entourant un diamètre extérieur Ad de l'embrayage à friction (1), lesquelles entretoises prennent appui contre la paroi (18) et sont fixées sur ladite paroi (18) par l'intermédiaire de vis (23).

5. Embrayage à friction selon la revendication 4, **caractérisé en ce que** chaque entretoise de fixation (20, 21, 22) présente un oeillet (30) de section transversale cylindrique circulaire duquel partent tangentiellement des brides de raidissement (31, 32) relativement courtes.

6. Embrayage à friction selon les revendications 3 et 4, **caractérisé en ce que** la plaque d'appui (19) présente approximativement la forme d'un triangle isocèle avec des côtés (24, 25, 26) au sommet (27, 28, 29) duquel sont placées les entretoises de fixation (20, 21, 22).

7. Embrayage à friction selon l'une des revendications 4 à 6, **caractérisé en ce que** les entretoises de fixation (20, 21, 22) sont fabriquées d'une seule pièce avec la plaque d'appui (19).

8. Embrayage à friction selon l'une des revendications 3 à 7, **caractérisé en ce que** le boîtier de cylindre (14) est fabriqué d'une seule pièce avec la plaque d'appui (19).

9. Embrayage à friction selon les revendications 7 et 8, **caractérisé en ce que** la plaque d'appui (19) est réalisée en tant que pièce en fonte d'un type à métal léger ou produit sidérurgique.

10. Embrayage à friction selon l'une des revendications 3 à 9, **caractérisé en ce que** dans la plaque d'appui (19) sont intégrés des raccords (36, 37) et des conduites (38, 39) pour le dispositif d'actionnement hydraulique (11).
